# EUROPEAN PATENT SPECIFICATION

(11) **EP 2 028 595 B1**
(45) Date of publication and mention of the grant of the patent: **12.10.2011**
(21) Application number: 08014461.1
(22) Date of filing: 13.08.2008
(51) Int. Cl.: G06F 12/08

(54) **Hierarchical cache memory system**
Hierarchisches Cache-Speichersystem
Système de mémoire cache hiérarchique

(30) Priority: 24.08.2007 JP 2007218400
(43) Date of publication of application: 25.02.2009
(73) Proprietor: Renesas Electronics Corporation, Kanagawa (JP)
(72) Inventor: Miwa, Hideyuki, Kawasaki, Kanagawa 211-8668 (JP); Yamada, Tamotsu, Kawasaki, Kanagawa 211-8668 (JP)
(74) Representative: Glawe, Delfs, Moll

(56) References cited:
- EP-A- 1 182 563
- JP-A- 11 102 320
- JP-A- 2006 091 995
- US-A- 6 044 440
- US-A1- 2007 005 900
- US-B1- 6 356 980

## Description

### BACKGROUND OF THE INVENTION

### 1. Field of the Invention

The present invention relates to a hierarchical cache memory system, and particularly relates to a hierarchical cache memory system having a write-back controller.

### 2. Description of Related Art

In a computer system having cache memory between a central processing unit (CPU) which can operate at high speed and external memory (main memory) which has a large capacity and operates at low speed, dirty data, which are not written into the external memory by the CPU are caused while the data are already written into the cache memory by the CPU for updating. Here, when the CPU stops a clock signal supplied to the CPU and shifts to sleep mode by turning off the power supplied to the cache memory, the CPU is required to write back all the dirty data stored in the cache memory to the external memory. This is because all the data stored in the cache memory are lost due to the stop of the power supply to the cache memory.

In a computer system in which a first cache and a second cache are provided between the CPU and the external memory, dirty data stored in the first cache are once written back from the first cache to the second cache. Afterwards, the dirty data written back from the first cache to the second cache and the different dirty data previously written back and already stored in the second cache are all together written back from the second cache to the external memory. When the write-back of the dirty data from the first cache to the second cache is completed, the CPU can shift to sleep mode.

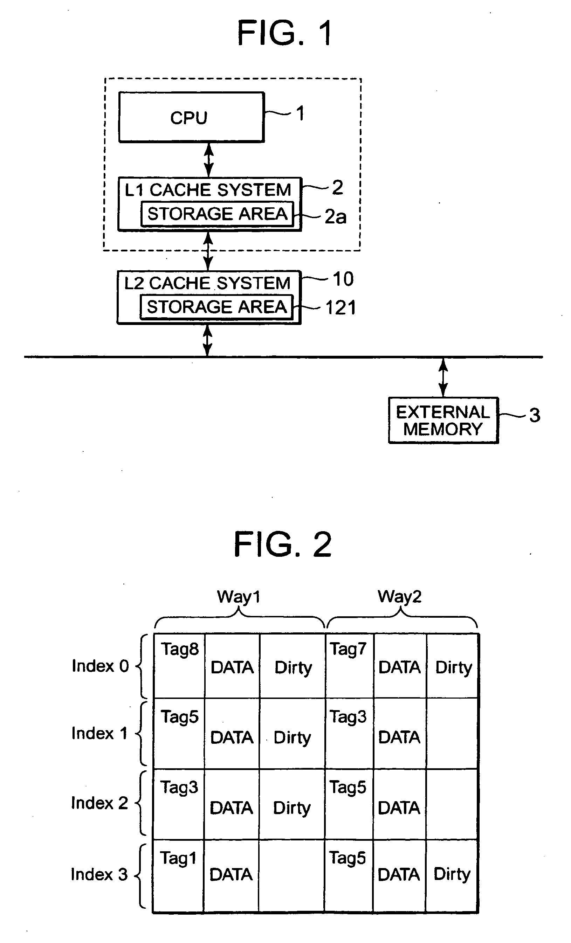

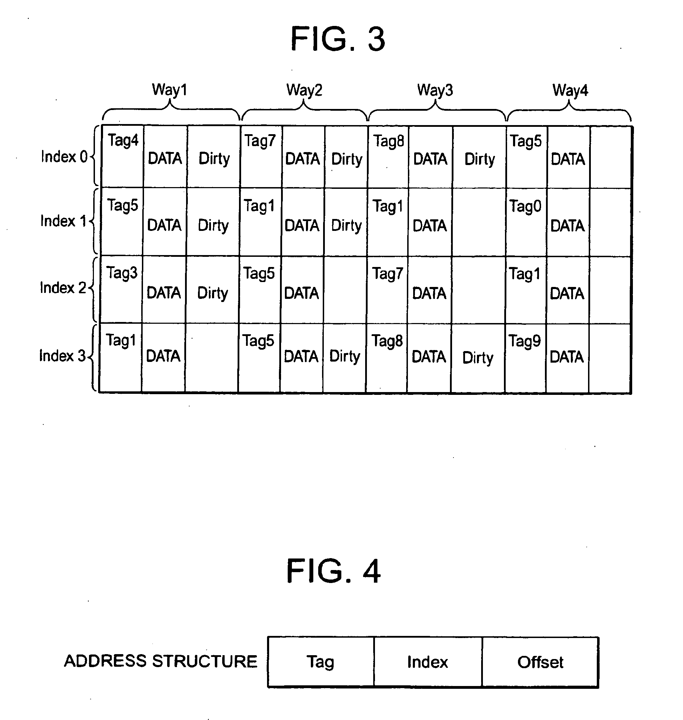

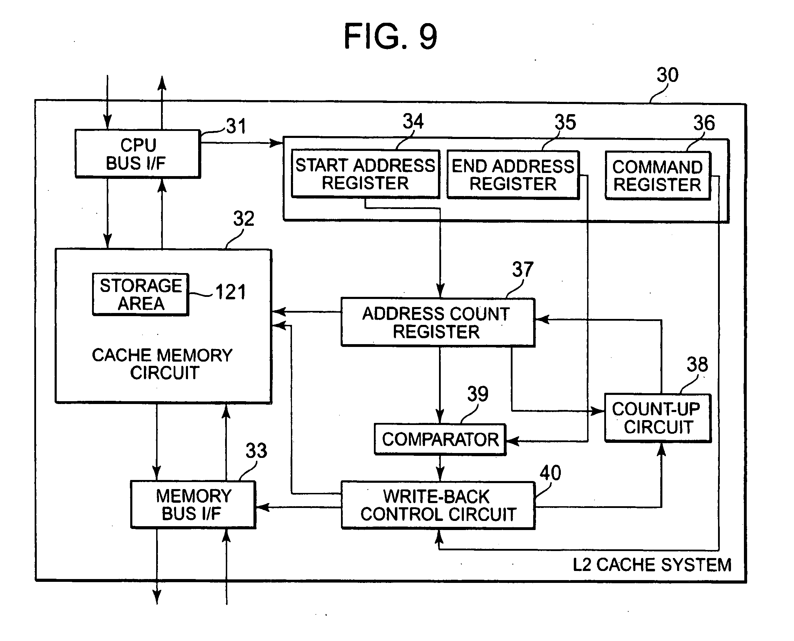

FIG. 1 shows a computer system comprising a CPU 1, an L1 cache system including a storage area 2a functioning as a first cache, an L2 cache system including a storage area 121 functioning as a second cache, and external memory 3. FIG. 9 is a diagram showing a conventional configuration of the L2 cache system. A cache memory circuit 32 includes the storage area 121 shown in FIG. 1. The storage area 2a is a two-way set associative cache memory, and manages and stores data shown in FIG. 2 with Indexes and Ways. The storage area 121 is a four-way set associative cache memory, and manages and stores data shown in FIG. 3 with Indexes and Ways. In FIGS. 2 and 3, data marked as Dirty indicate dirty data which are written and updated by the CPU.

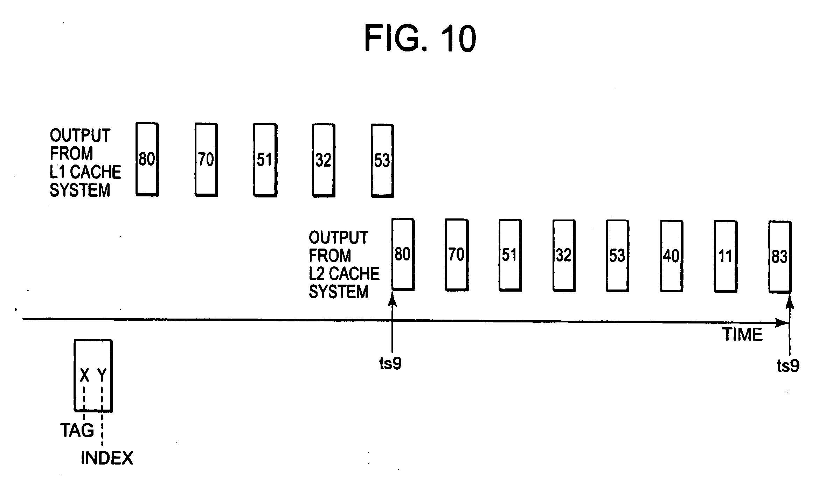

FIG. 10 shows a flow of a write-back process in the computer system of FIG. 1 including the L2 cache system shown in FIG. 9. As shown in FIG. 10, with the above conventional technology, the CPU 1 firstly transmits an instruction to the L1 cache system, so that the L1 cache system writes back dirty datum of (Tag, Index) = (80) from the storage area 2a to the storage area 121. From this forward, the L1 cache system sequentially writes back data of (Tag, Index) = (70), (51), (32) and (53) to the storage area 121. In other words, the L1 cache system sequentially outputs dirty data stored in the storage area 2a in the order of ascending Index values. The L1 cache system occupies a bus provided between the L1 cache system and the L2 cache system for a specified period of time, and writes back each piece of data from the storage area 2a to the storage area 121. Therefore, referring to FIG. 3, for example, the data of (Tag, Index) = (80), (70), (51), (32) and (53) are written into the storage area 121. Then, after the L1 cache system writes back all the dirty data stored in the storage area 2a to the storage area 121, the CPU 1 sets a command register 36 included in the L2 cache system to write-backmode. With the setup of the write-back command, the CPU 1 sets, for a start address register 34, a minimum value among the Index values held by the storage area 121, and sets, for an end address register 35, a maximum value among the Index values held by the storage area 121. For example, in the storage area 121 shown in FIG. 9, the CPU 1 sets an Index "0" for the start address register 34, and sets "3" for the end address register 35. After performing the above process, the CPU 1 stops the clock signal supplied to the CPU 1 and stops the power supply to the L1 cache system to shift to sleep mode.

Afterwards, the start address register 34 outputs the stored Index value 0 to an address count register 37, and the address count register 37 stores the received Index value 0 and outputs the value to a comparator 39. The comparator 39 compares the Index value 3 outputted by the end address register 35 and the Index value 0 outputted by the address count register 37. Here, when the Index value outputted by the address count register 37 is smaller than the Index value outputted by the end address register 35, the comparator 39 transmits a write-back request signal to a write-back control circuit 40. The write-back control circuit 40 which has received the write-back request signal transmits a write-back execution signal to the cache memory circuit 32 and a memory bus interface 33. The cache memory circuit 32 which has received the write-back execution signal writes back dirty data in the storage area 121, the data having the Index value 0 read from the address count register 37, to an external memory via the memory bus interface 33. Specifically, the cache memory circuit 32 writes back the data of (Tag, Index) = (80) and (70) to the external memory 3. On the other hand, when having received the write-back request signal from the comparator 39, the write-back control circuit 40 outputs a count-up request signal to a count-up circuit 38. The count-up circuit 38 counts up the Index value 0 read from the address count register 37 to calculate the Index value 1, and transmits the Index value 1 to the address count register 37. The address count register 37 updates the Index value from 0 to 1 and stores the updated value.

After storing the Index value 1, the address count register 37 outputs the Index value 1 to the comparator 39 as described above. Accordingly, similarly to the previous case, the comparator 39 transmits the write-back request signal to the write-back control circuit 40, and the write-back control circuit 40 which has received the write-back request signal transmits the write-back execution signal to the cache memory 32 and the memory bus interface 33. The cache memory circuit 32 which has received the write-back execution signal reads the Index value 1 from the address count register 37. Afterwards, the cache memory circuit 32 writes back dirty data in the storage area 121, the data having the read Index value 1, to the external memory via the memory bus interface 33. Specifically, the cache memory circuit 32 writes back the datum of (Tag, Index) = (51) to the external memory 3. In addition, the write-back control circuit 40 which has received the write-back request signal transmits the count-up request signal to the count-up circuit 38, and the count-up circuit 38 reads and counts up the Index value 1 stored in the address count register 37. The count-up circuit 38 counts up the Index value 1 to calculate an Index value 2 and transmit the Index value 2 to the address count register 37. From this forward, the Index value stored in the address count register 37 is similarly transited to 2 to 3, and the cache memory circuit 32 writes back dirty data which have matching Index values from the storage area 121 to the external memory 3 (that is, the data of (Tag, Index) = (32) and (53)). When the Index value stored in the address count register 37 becomes 3, the comparator 39 transmits a write-back completion signal to the write-back control circuit 40 and the memory bus interface 33 since the Index value received from the address count register 37 agrees with the Index value received from the end address register 35. The write-back control circuit 40 which has received the write-back completion signal transmits a write-back stop signal to the cache memory circuit 32. When having received the write-back stop signal, the cache memory circuit 32 writes back the dirty data stored in the storage area 121, the data having Index value 3, to the external memory 3 via the memory bus interface 33, and then causes the L2 cache system to shift to sleep mode.

On the other hand, as a technology related to the above conventional technology, Japanese Patent Application Publication No. 2006-91995 discloses a write-back apparatus of cache memory, which improves use efficiency of a system bus accompanying a continuous write-back process in a case where dirty cache lines continue. This write-back apparatus includes: a write-back controller which scans cache lines to detect dirty cache lines; a snooper which monitors the status of the system bus; and a single write-back write buffer which buffers the data of the detected dirty cache lines and writes back to an external memory while the system bus is in the idling state. Additionally, Japanese Patent Application Publication No. Hei 11-102320 discloses a hierarchical cache system, which is controlled by an MESI protocol. This system performs writing back ahead of a write-back request made due to a cache error when all the Ways of a specific cache line are found to be in a state M.

However, since, with the above conventional technology, the L2 cache system starts writing back from the storage area 121 to the external memory 3 after the L1 cache system completes writing back from the storage area 2a to the storage area 121, it requires much time from when the L1 cache system starts writing back to when the L2 cache system completes writing back to the external memory.

Further hierarchical cache memory systems are disclosed in US 6 044 440, US 2007/0005900 A1, EP 1 182 563 A1 and US 6 356 980 B1.

### SUMMARY

The invention is defined by the appended independent claim 1. A preferred embodiment is defined by the appended dependent claim 2.

A hierarchical cache memory system comprising: a first cache system having a first cache memory storing first data , said first cache system further having a first cache controller; and a second cache system coupled to said first cache system and having a second cache controller, said first cache system transferring said first data toward said external memory through said second cache system, wherein said first cache controller controls said first cache system to perform a first transfer operation in which said first cache controller obtains said first data from said first cache memory and transfers said first data to said second cache system, wherein said second cache controller controls said second cache system to perform a second transfer operation in which said second cache controller receives said first data from said first cache system and transfers said first data toward said external memory, wherein said first and second transfer operations are performed at least partially in parallel. According to the present invention, since the output of the first dirty data from the first cache memory is produced in parallel with the output of the first dirty data from the second cache memory, it is made possible to increase the speed of the write-back process in the hierarchical cache memory.

### BRIEF DESCRIPTION OF THE DRAWINGS

The above and other objects, advantages and features of the present invention will be more apparent from the following description of certain preferred embodiments taken in conjunction with the accompanying drawings, in which:
FIG. 1 is a diagram showing a schematic configuration of a computer system to which the present invention can be implemented.
FIG. 2 is a view schematically showing a storage area of an L1 cache system in FIG. 1.
FIG. 3 is a view schematically showing a storage area of an L2 cache system in FIG. 1.
FIG. 4 is a view showing an address structure of the storage area held by each of the L1 and L2 cache systems.
FIG. 5 is a diagram showing a detailed configuration of the L2 cache system according to a first example.
FIG. 6 is a diagram for explaining the operation of the L2 cache system in FIG. 5.
FIG. 7 is a diagram showing a time required for a write-back process in the L2 cache system according to the first example.
FIG. 8 is a diagram showing a time required for a write-back process in the L2 cache system according to the embodiment of the present invention.
FIG. 9 is a block diagram showing a configuration of a conventional L2 cache system.
FIG. 10 is a diagram showing a time required for a write-back process in the conventional L2 cache system.
FIG. 11 is a diagram showing a detailed configuration of the L2 cache system according to a second example.

### DETAILED DESCRIPTION OF THE PREFERRED EMBODIMENTS

The invention will be now described herein with reference to examples and illustrative embodiments.

Detailed description will be given of the best mode for carrying out the present invention with reference to drawings. Similarly to the conventional technology, a computer system shown in FIG. 1 will be applied to the embodiment, too.

FIG. 2 is a view schematically showing a storage area 2a of an L1 cache system 2 in FIG. 1. The description will hereinafter be given in the embodiment, assuming that the storage area 2a of the L1 cache system 2 has a data storage structure of a 2-way set-associative system shown in FIG. 2. Additionally, data to which a word "Dirty" is attached in FIG. 2 represent dirty data updated by a CPU 1, and are transmitted to an L2 cache system 10 as those to be written back in an operational example which will be described later. Moreover, the L1 cache system 2 has a controller (cache controller) therein, and the controller controls the operation of the L1 cache system 2.

FIG. 3 is a view schematically showing a storage area 121 of the L2 cache system 10 in FIG. 1. The description will hereinafter be given in the embodiment, assuming that the storage area 121 of the L2 cache system 10 has a data structure of 4-way set-associative system as shown in FIG. 3. Data to which a word "Dirty" is attached in FIG. 3 represent dirty data which are not written back to external memory (main memory) 3, and the data, too, are to be written back in addition to the write-back data transmitted from the L1 cache system 2 in the operational example which will be described later.

In these set-associative systems, it is possible to store a plurality of data in a block of a cache. For example, data whose Index parts of addresses on the external memory 3 shown in FIG. 4 are the same are stored in arbitrary Ways of matching Indexes in FIGS. 2 and 3. Furthermore, data stored in the same Index are identifiable by the Tag part. For example, when an address "80" is specified, if there is a datum whose Tag is "8" in a block of an Index "0" in FIGS. 2 and 3, that is a cache hit, and if there is not a datum whose Tag is "8", that is a miss hit.

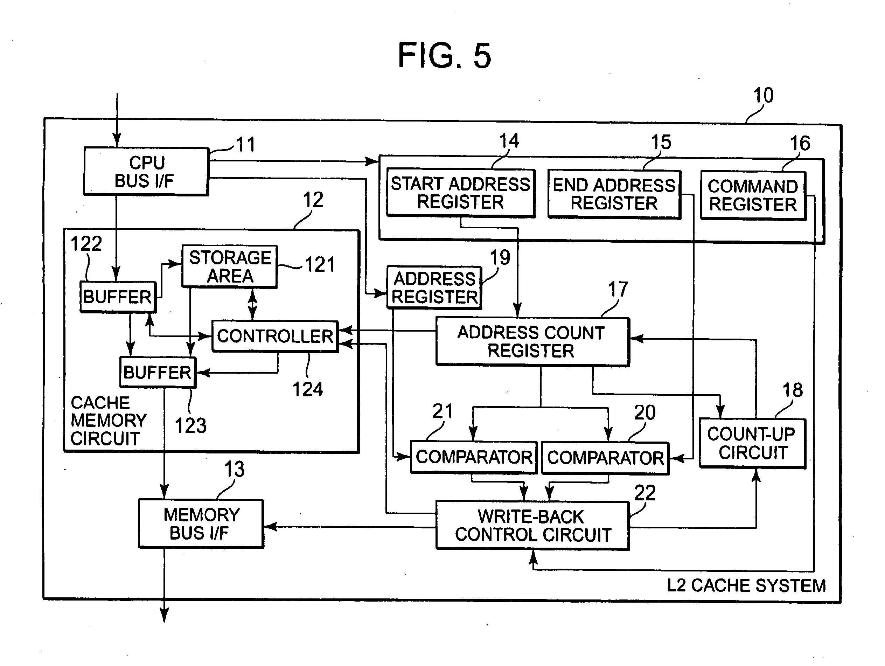

FIG. 5 is a block diagram showing a detailed configuration of the L2 cache system according to the first example. Furthermore, the operation of the L1 cache system can be set to be controlled by the controller (cache controller) being in the L1 cache system, for example. It is hereunder assumed that the operation performed by the L1 cache system is controlled by the cache controller. With reference to FIGS. 1 and 5, the L1 cache system receives an instruction from the CPU 1, and outputs dirty data stored in the storage area 2a to a buffer 122 included in a cache memory circuit 12 via a CPU bus interface (CPU BUS I/F) and outputs an Index value of a datum outputted to the buffer 122 to an address register 19. The CPU 1 outputs a minimum Index value held by the storage area 2a to a start address register 14 when the L1 cache system executes the write-back process, and also outputs a maximum Index value similarly held by the storage area 2a to an end address register 15. Moreover, the CPU 1 outputs a command to cause the L2 cache system to execute the processing to a command register 16. At this point, the present invention is different from the above conventional technology, in which after the L1 cache system writes back dirty data in the storage area 2a to the storage area 121, the CPU 1 sets values for the start address register 34 and the end address register 35, and a command for the command register 36. Additionally, in the above conventional technology, a value that the CPU 1 sets for the start address register 34 is the minimum Index value held by the storage area 121 and a value that the CPU 1 sets for the end address register 35 is the maximum Index value held by the storage area 121.

The start address register 14 stores the Index value received from the CPU 1 as well as outputs the stored Index value to an address count register 17. The end address register 15 stores the Index value received from the CPU 1 as well as outputs the received Index to a comparator 20. The command register 16 outputs to a write-back control circuit 22 a mode signal showing a write-back mode instructed in the command outputted by the CPU 1.

The address count register 17 outputs to the comparator 20 and a comparator 21 the Index value received from the start address register 14. In addition, the address count register 17 will later store a new Index value counted up by a count-up circuit 18 and output the value to the comparators 20 and 21.

The comparator 21 receives and compares the Index value outputted by the address register 19 and the Index value outputted by the address count register 17. As the result of the comparison, the comparator 21 transmits a write-back request signal to the write-back control circuit 22 when the Index value outputted by the address register 19 is greater than the Index value outputted by the address count register 17. The comparator 20 compares the Index value outputted by the address count register 17 with an Index value 15 outputted by the end address register 15. When the Index value outputted by the address count register 17 is equal to the Index value outputted by the end address register 15, the comparator 20 judges that the L1 cache system shifts to sleep mode after all dirty data having the Index value are written back from the storage area 2a to the storage area 121, and transmits an L1 cache system write back completion signal to the write-back control circuit 22.

When having received the write-back request signal from the comparator 21, the write-back control circuit 22 outputs a write-back execution signal to a controller 124 included in the cache memory circuit 12 and a memory bus interface 13 as well as outputs a count-up request signal to the count-up circuit 18. In addition, when having received the L1 cache system write back completion signal from the comparator 20, the write-back control circuit 22 outputs the L1 cache system write back completion signal to the controller 124, too.

The buffer 122 holds dirty data outputted by the L1 cache system, and outputs the held data to the storage area 121 in response to a read signal from the controller 124. For example, the buffer 122 can be regarded as a buffer which can hold a plurality of data and outputs the held data in the order of receipt (first in first out: FIFO) in response to the read signal from the controller 124. A buffer 123 can also be taken as the same buffer.

The controller 124 transmits the read signal to the buffer 122. When having received the write-back execution signal from the write-back control circuit 22, the controller 124 reads the Index value from the address count register 17. The controller 124 then judges that the data having the read Index value are no longer written back from the L1 cache system, and transmits the read signal to the storage area 121. The storage area 121, in response to the read signal from the controller 124, outputs to the buffer 123 dirty data having the Index value that the controller 124 has read from the address count register 17.

The buffer 123 holds the data received from the storage area 121. The buffer 123 then outputs the data to the external memory via the memory bus interface 13 in response to an output signal that the controller 124 transmits to the buffer 123.

Description will hereinafter be given of the write-back operation of the first example with reference to FIG. 1 to 7. The CPU 1 firstly sets a specified command showing the write-back mode for the command register 16. Regarding this as a first mode, the command register 16 transmits a mode signal showing the first mode to the write-back control circuit 22. In the first mode, the write-back control circuit 22 does not output the signal to the controller 124 at this point. The CPU1 secondly sets start and end points of the write-back in the storage area 2a for the start address register 14 and the end address register 15. For example, when the data shown in FIG. 2 are stored in the storage area 2a, the CPU 1 sets a start point of the write-back to an Index value 0 and an end point to an Index value 3.

The start address register 14 then outputs the stored Index value 0 to the address count register 17, and the address count register 17 stores the Index value 0. Moreover, the address count register 17 outputs the stored Index value 0 to the comparators 20 and 21.

Next, the L1 cache system starts writing back data stored in the storage area 2a. The controller in the L1 cache system reads the dirty data stored in the storage area 2a shown in FIG. 2 in the order of ascending Indexes to sequentially output the data to the buffer 122. In other words, in the specific first example, the controller in the L1 cache system outputs to the buffer 122 the dirty data stored in the storage area 2a in the order of (Tag, Index) = (80), (70), (51), (32), and (53). The controller in the L1 cache system firstly outputs the datum of (Tag, Index) = (80) shown in FIG. 2 to the buffer 122. The buffer 122 holds the datum of (Tag, Index) = (80). Furthermore, the controller outputs 0 being the Index of the output data to the address register 19.

Next, the L1 cache system starts writing back data stored in the storage area 2a. The L1 cache system outputs to the buffer 122 the dirty data stored in the storage area 2a shown in FIG. 2 in the order of ascending Indexes. In other words, in the specific first example, the L1 cache system outputs to the buffer 122 the dirty data stored in the storage area 2a in the order of (Tag, Index) = (80), (70), (51), (32), and (53). The CPU 1 firstly outputs the datum of (Tag, Index) = (80) shown in FIG. 2 to the buffer 122. The buffer 122 holds the datum of (Tag, Index) = (80). Furthermore, the L1 cache system outputs 0 being the Index of the output data to the address register 19.

The address register 19 stores the received Index value 0 to output to the comparator 21. The comparator 21 compares the Index value 0 outputted by the address count register 17 and the Index value 0 outputted by the address register 19. In this case, the Index value outputted by the address register 19 is 0 and the Index value that the address count register 17 outputs to the comparator 21 is also 0. Therefore, the comparator 21 judges that the L1 cache system is currently writing back the dirty data which are stored in the storage area 2a and have the Index value 0, and does not transmit the write-back execution signal to the write-back control circuit 22. Specifically, the controller of the L1 cache system 2 outputs the datum of (Tag, Index) = (80) to the buffer 122.

The comparator 20 compares the Index value 0 outputted by the address count register 17 and the Index value 3 of the end address register 15. In this case, since the Index value 0 outputted by the address count register 17 is different from the Index value 3 of the end address register 15, the comparator 20 does not output the L1 cache system write back completion signal to the write-back control circuit 22.

While the Index value stored in the address register 19 is 0, the comparator 21 does not transmit the write-back request signal to the write-back control circuit 22. Accordingly, the write-back control circuit 22 does not output the write-back execution signal to the controller 124, either. On the other hand, the controller of the L1 cache system is caused to output the data up to (Tag, Index) = (80) and (70) to the buffer 122. Hence, the controller 124 transmits the read signal to the buffer 122. The controller 124 reads the data up to (Tag, Index) = (80) and (70) which were outputted by the L1 cache system and held by the buffer 122, and writes the data into the storage area 121. Here, for convenience, with reference to FIG. 3, Way 3 and Way 2 of Index 0 in the storage area 121 are assumed to be overwritten with the data being (Tag, Index) = (80) and (70), respectively.

After outputting all the data of (Tag, Index) = (80) and (70) to the buffer 122, the controller of the L1 cache system 2 then outputs the datum of (Tag, Index) = (51). Moreover, the controller outputs the Index value 1 to the address register 19. The address register 19 stores the Index value 1 and outputs the value to the comparator 21. At this point, the Index value outputted by the address register 19 is 1, and the Index value outputted by the address count register 17 is 0. Therefore, the Index value outputted by the address register 19 is greater than the Index value outputted by the address count register 17, the comparator 21 transmits the write-back request signal to the wri te-back control circuit 22. Furthermore, at this point, the comparator 20 does not output the L1 cache system write back completion signal.

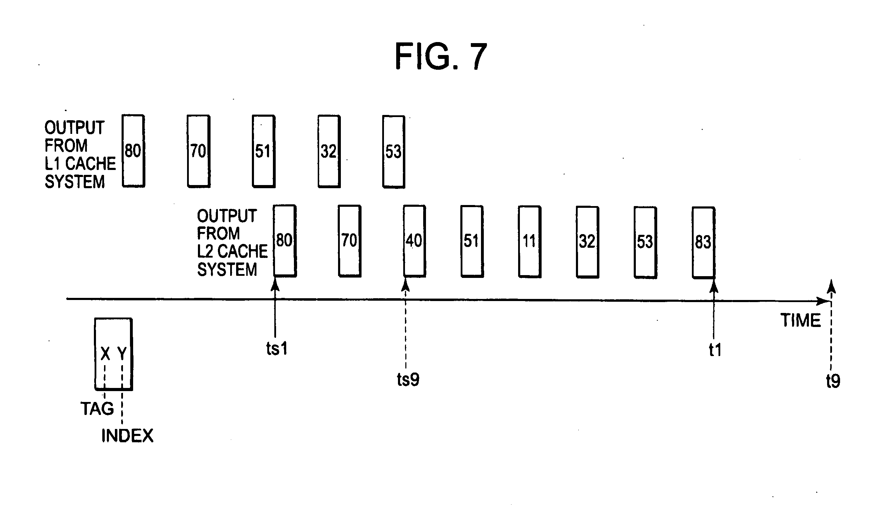

The write-back control circuit 22 which has received the write-back request signal from the comparator 21 transmits the write-back execution signal to the controller 124 and the memory bus interface 13. The controller 124 which has received the write-back execution signal accesses the address count register 17 to read the Index value 0 from the address count register 17. The controller 124 then judges that the dirty data having the Index value 0 are no longer transmitted from the L1 cache system 2 to the buffer 122. This is because the controller of the L1 cache system 2 outputs the dirty data stored in the storage area 2a in the order of ascending Indexes. Accordingly, the controller 124 transmits the read signal to the storage area 121, and the storage area 121 outputs the dirty data having the Index value 0 to the buffer 123. Specifically, as shown in FIG. 3, the storage area 121 outputs to the buffer 123 the data of (Tag, Index) = (80), (70) and (40). On the other hand, the controller 124 transmits an output signal to the buffer 123. The buffer 123 which has received the output signal from the controller 124 then writes back the data of (Tag, Index) = (80), (70) and (40), the data having been received from the storage area 121, to the external memory 3 via the memory bus interface 13. It can be seen from FIG. 7 that the data of (Tag, Index) = (80), (70) and (40) are sequentially outputted from a time ts1. Moreover, the write-back control circuit 22 transmits a count-up request signal to the count-up circuit 18. The count-up circuit 18 which has received the count-up request signal counts up the Index value 0 read from the address count register 17 to calculate the Index value 1 and transmits the Index value 1 to the address count register 17. The address count register 17 updates the Index value 0 to the Index value 1 and stores the Index value 1. On the other hand, the datum of (Tag, Index) = (51) that the controller of the L1 cache system 2 has outputted to the buffer 122 is written into the storage area 121 by the controller 124 as described above.

While the buffer 123 is writing back the data to the external memory 3, the controller of the L1 cache system 2 continues to output to the buffer 122 the dirty data stored in the storage area 2a. For example, with reference to FIGS. 2 and 7, the datum of (Tag, Index) = (32) is transmitted to the buffer 122 after the datum of (Tag, Index) = (51) in the first example. Accordingly, the Index value stored in the address register 19 becomes 2. Here, at this point, the Index value stored in the address count register 17 is 1. Accordingly, the comparator 21 receives the Index value 2 from the address register 19 and the Index value 1 from the address count register 17 and compares these Index values. Since the Index value received from the address register 19 is greater than the Index value received from the address count register 17, the comparator 21 transmits the write-back request signal to the write-back control circuit 22. The comparator 20 does not transmit the L1 cache system write back completion signal to the write-back control circuit 22.

The write-back control circuit 22 which has received the write-back request signal transmits the write-back execution signal to the controller 124 and the memory bus interface 13. The controller 124 which has received the write-back execution signal from the write-back control circuit 22 reads the Index value 1 stored in the address count register 17 from the address count register 17 as well as judges that the data having the read Index value 1 are not transmitted from the L1 cache system 2 to the buffer 122. The controller 124 then transmits the read signal to the storage area 121. The storage area 121 responds to the control signal and transmits to the buffer 123 the dirty data which is stored in the storage area 121 and have the Index value 1. For example, with reference to FIGS. 3 and 7, the storage area 121 transmits (Tag, Index) = (51) and (11) to the buffer 123.

On the other hand, the controller 124 transmits the output signal to the buffer 123. The buffer 123 which has received the output signal from the controller 124 writes back the data of (Tag, Index) = (51) and (11) received from the storage area 121 to the external memory 3 via the memory bus interface 13. It can be seen from FIG. 7 that the data of (Tag, Index) = (51) and (11) are sequentially outputted from a time ts9.

In addition, the count-up request signal is transmitted to the count-up circuit 18. The count-up circuit 18 which has received the count-up request signal reads and counts up the Index value 1 stored in the address count register 17 to calculate the Index value 2. The count-up circuit 18 then transmits the Index value 2 to the address count register 17, and the address count register 17 stores the received Index value 2. Here, (Tag, Index) = (32) that the controller of the L1 cache system 2 has outputted to the buffer 122 is written into the storage area 121 by the reading operation from the buffer 122, the operation being performed by the controller 124.

At the point when the buffer 123 is writing back (Tag, Index) = (51) and (11) to the external memory 3, the controller of the L1 cache system 2 has already outputted (Tag, Index) = (53). Accordingly, the Index value stored in the address register 19 becomes 3. Similarly, from this forward, the write-back control circuit 22 transmits the write-back execution signal and the like to the controller 124 and the like based on the Index value 2 stored in the address count register 17, the controller 124 reads the Index value 2 stored in the address count register 17, and the storage area 121 transmits to the buffer 123 the dirty data which have the Index value 2 and are stored in the storage area 121. The buffer 123 then writes back the dirty data received from the storage area 121 to the external memory 3 in response to the output signal from the controller 124. For example, with reference to FIGS. 3 and 7, (Tag, Index) = (32) is outputted from the buffer 123, that is, from the L2 cache system 10. In addition, the datum of (Tag, Index) = (53) that the controller of the L1 cache system 2 outputted to the buffer 122 is written into the storage area 121 as in the above.

The write-back control circuit 22 transmits the count-up request signal to the count-up circuit 18 as well as transmits the write-back execution signal to the controller 124. Therefore, the count-up circuit 18 reads and counts up the Index value 2 held by the address count register 17 to calculate the Index value 3. The count-up circuit 18 transmits the Index value 3 to the address count register 17, and the address count register 17 stores the Index value 3.

At this point, the Index value stored in the address count register 17 becomes 3. The address count register 17 transmits the Index value 3 to the comparators 20 and 21. Since the controller of the L1 cache system 2 has already outputted the datum of (Tag, Index) = (53), the Index value stored in the address register 19 is 3, too. Accordingly, the comparator 21 does not transmit the write-back execution signal to the write-back control circuit 22 since both of the Index value received from the address count register 17 and the Index value received from the address register 19 are 3. On the other hand, the comparator 20 transmits the L1 cache system write back completion signal to the write-back control circuit 22 since the Index values received from the address count register 17 and the end address register 15 are 3 and equal to each other. The write-back control circuit 22 transmits the L1 cache system write back completion signal to the controller 124 after receiving the L1 cache system write back completion signal. The controller 124 which has received the L1 cache system write back completion signal reads out the Index value 3 from the address count register 17. The controller 124 then judges that the L1 cache system 2 does not output to the buffer 122 the dirty data having an Index value greater than the Index value 3. The controller 124 then transmits the read signal to the storage area 121. The storage area 121 outputs to the buffer 123 the dirty data which have the Index value 3 or greater and are held by the storage area 121. The controller 124 transmits the output signal to the buffer 123. The buffer 123 writes back the dirty data received from the storage area 121 to the external memory 3 via the memory bus interface 13 in response to the control signal. For example, in FIG. 7, (Tag, Index) = (53) and (83) are outputted from the L2 cache system 10. Please note that in the embodiment, the maximum Index value held by the storage area 121 is 3, and dirty data having an Index value greater than 3 is not outputted from the storage area 121. However, for example, when the storage area 121 has dirty data managed with Indexes greater than 3, these values are outputted from the buffer 123.

In the embodiment, if the storage area 121 outputs to the buffer 123 the dirty data having the Index value 3, and the buffer 123 writes back these pieces of data to the external memory 3 via the memory bus interface 13, the L2 cache system 10 shifts to sleep mode.

Here, comparing FIGS. 7 and 10, it can be seen that it is possible to shorten a time from when the L1 cache system starts outputting dirty data to when the L2 cache system outputs the last dirty datum by the write-back process according to the first example. In the write-back process according to the embodiment, the L2 cache system starts writing back without waiting until the L1 cache system completes with the write-back, and the write-back from the L1 cache system to the L2 cache system is executed in parallel with the write-back from the L2 cache system to the external memory.

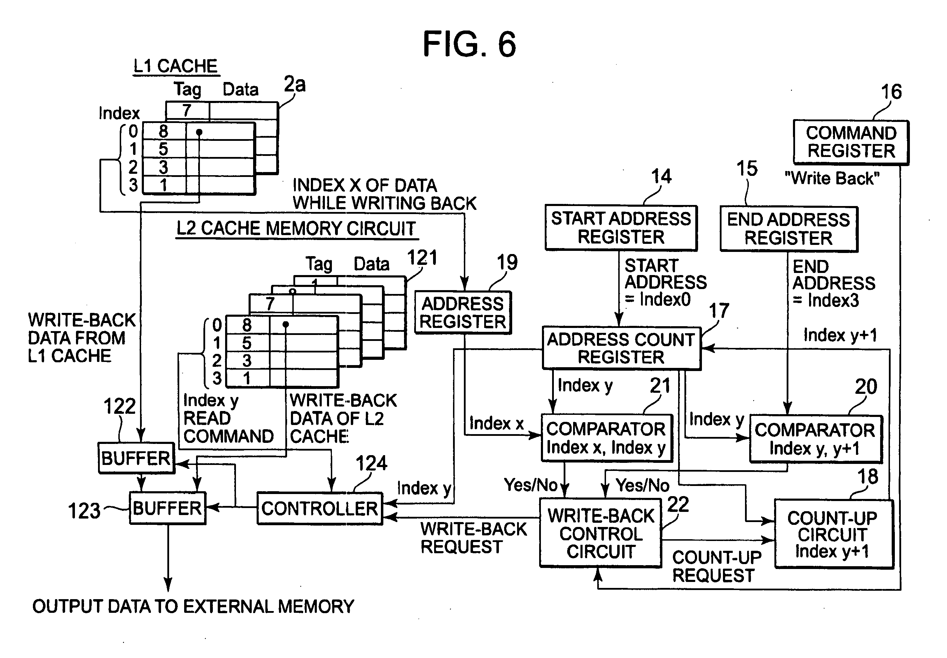

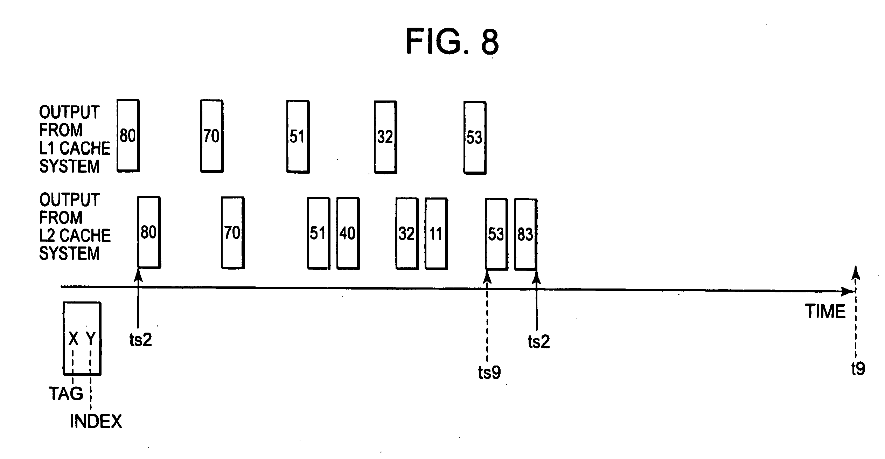

Next, description will be given of the embodiment of the present invention in which alteration is made in the operation of the cache memory circuit 12 in the first example to further shorten the write-back process time. Detailed description will herein after be given of the embodiment with reference to FIGS. 6 and 8.

The CPU 1 firstly sets a specified command showing the write-back mode for the command register 16. Regarding this as a second mode, the command register 16 transmits a mode signal showing the second mode to the write-back control circuit 22. When the write-back control circuit 22 receives the mode signal showing the second mode, unlike in the first example, the write-back control circuit 22 transmits the mode signal showing the second mode to the controller 124. The controller 124 recognizes that the write-back processing method specified by the CPU 1 is the second mode, by receiving the mode signal, and transmits the output signals to the buffers 122 and 123. Afterwards, the controller of the L1 cache system2 starts writing back dirty data from the storage area 2a. As described in the first example, the data of (Tag, Index) = (80), (70), (51), (32) and (53) shown in FIG. 2 are sequentially transmitted to the buffer 122.

Here, the buffer 122 which has received the output signal from the controller 124, immediately after receiving dirty data that the controller of the L1 cache system 2 has read from the storage area 2a, outputs these pieces of data to the buffer 123. The buffer 123 which has received the control signal from the controller 124 immediately writes back the dirty data received from the buffer 122 to the external memory 3 via the memory bus interface 13. Therefore, as shown in FIG. 8, after the datum of (Tag, Index) = (80) is transmitted from the L1 cache system 2, the datum of (Tag, Index) = (80) is immediately transmitted from the L2 cache system 10. Similarly, after the datum of (Tag, Index) = (70) is transmitted from the L1 cache system 2, the datum of (Tag, Index) = (70) is immediately transmitted from the L2 cache system 10. In other words, differently from the first example, the controller 124 does not write dirty data received by the buffer 122 into the storage area 121 in the second mode that the CPU 1 sets for the command register 16. The buffers 122 and 123 pass through one dirty datum received from the L1 cache system 2 after another, and writes the data back to the external memory 3. Here, the controller 124 stores, in a specified storage medium, information on the Tags and the Indexes of the dirty data that the buffers 122 and 123 have passed through.

On the other hand, when the controller of the L1 cache system 2 transmits (Tag, Index) = (51), and the buffer 122 receives (Tag, Index) = (51), the address register 19 is caused to store the Index value 1 as in the first example. Taking it the same as the first example, the Index value stored in the address count register 17 at this point is 0. Consequently, the comparator 21 receives the Index value 1 from the address register 19 and the Index value 0 from the address count register 17. The comparator 21 transmits the write-back request signal to the write-back control circuit 22 since the Index value stored in the address register 19 is greater than the Index value stored in the address count register 17.

The write-back control circuit 22 which has received the write-back request signal from the comparator 21 transmits the write-back execution signal to the controller 124 as well as transmits the count-up request signal to the count-up circuit 18.

The controller 124 which has received the write-back execution signal reads the Index value 0 stored in the address count register 17 from the address count register 17. The controller 124 then judges that the dirty data having the Index value 0 are no longer written back from the L1 cache system 2. The controller 124 then transmits the read signal to the storage area 121. The storage area 121 outputs to the buffer 123 the dirty data which have not been written back from the L1 cache system 2 and have the Index value 0, in response to the received read signal. The operation of the storage area 121 is made possible by that the controller 124 stores the Tags and Indexes of the data which have passed through the buffers 122 and 123, that is, (Tag, Index) = (80) and (70) in the first embodiment. The controller 124 controls to output the dirty data which have not been written back from the L1 cache system 2 to the buffer 123 and have the Index value 0 in between periods when the buffer 123 outputs the dirty data received from the buffer 122. Hence, it can be seen, for example, from FIG. 8 that the L2 cache system 10 outputs the data of (Tag, Index) = (40) in between periods when the L2 cache system 10 outputs the dirty data of (Tag, Index) = (51) and (32).

As in the first example, from this forward, the Index values stored in the address register 19 and the address count register 17 are transited, the comparator 21 outputs the write-back execution signal to the write-back control circuit 22 in accordance with the transition, and the write-back control circuit 22 outputs the write-back execution signal to the controller 124. The controller 124 reads the Index value from the address count register 19 at the point of receiving the write-back execution signal. The controller 124 then instructs the storage area 121 to output dirty data which have the read Index value and have not been written back from the L1 cache system 2. On the instruction, the storage area 121 outputs the dirty data to the buffer 123. At this point, the storage area 121 outputs the dirty data which have not been written back from the L1 cache system 2 to the buffer 123 and which have the Index value 0 in between periods of outputting the dirty data that the buffer 123 received from the buffer 122. It can be seen, for example, from FIG. 8 that the L2 cache system 10 outputs the datum of (Tag, Index) = (11) in between periods when the L2 cache system 10 outputs the dirty data of (Tag, Index) = (32) and (53).

When the controller of the L1 cache system 2 outputs (Tag, Index) = (53) from the storage area 2a, the Index value stored in the address register 19 becomes 3. At this point, as in the first example, the Index stored in the end address register 15 is 3, too. Accordingly, the comparator 20 transmits the L1 cache system write back completion signal to the write-back control circuit 22. Afterwards, the controller 124 receives the L1 cache system-write-back completion signal from the write-back control circuit 22, and judges that dirty data having an Index value greater than 3 is no longer transmitted from the L1 cache system 2. The controller 124 then instructs the storage area 121 to output to the buffer 123 the dirty data that the L1 cache system 2 has not transmitted to the buffer 122, that are stored in the storage area 121, and that have the Index value 3 or greater. The storage area 121 outputs these pieces of data to the buffer 123, and the buffer 123 writes back the data to the external memory 3. Afterwards, the L2 cache system 10 shifts to sleep mode.

In the embodiment of the present invention operating as described above, compared with the first example, it is made possible to sweep dirty data out from the L2 cache system 10 at higher speed. For example, it is possible to apply the embodiment of the present invention to a high-speed write-back process when causing the L2 cache system 10 to shift to sleep mode (power-saving mode).

Although, in the above embodiment, the description was given of the example in which the present invention was applied to a computer system having the two-level cache configuration of L1 and L2 with their respective associations 2 and 4, it is also possible to adopt the present invention in a computer system having a hierarchical cache configuration with other associations and three levels or greater.

In addition, for example, although, in the above embodiment, the descriptions were given assuming that the end address of the write-back is specified by setting the end point of the end address register 15, it is also possible to set the number of operations of the count-up circuit 18 and perform the write-back within the specified number.

In the first first and the embodiment hitherto described, the L1 cache system 2 examines the entire storage area 2a held by the L1 cache system 2, and writes back all dirty data stored in the storage area 2a to the L2 cache system 10. Then, the L2 cache system 10, too, writes back the dirty data after examining the entire storage area 121 held by the L2 cache system 10. Here, in a second example, the controller of the L1 cache system 2 writes back only dirty data included in a part of the storage area 2a. Additionally, the controller 124 of the L2 cache system 10, too, writes back only dirty data included in a part of the storage area 121.

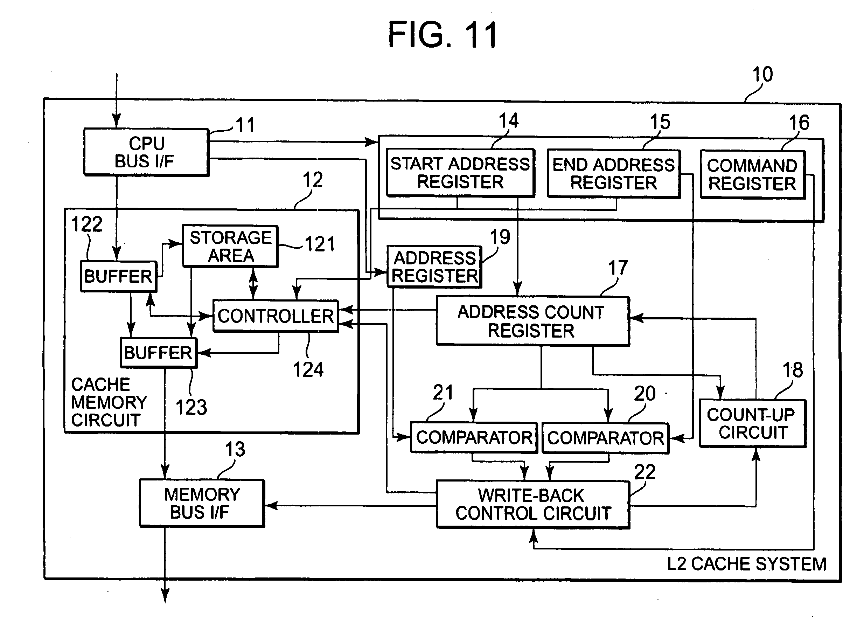

FIG. 11 shows an L2 cache system in the second example. The controller 124 of the L2 cache system 10 shown in FIG. 5 further has a function of reading address information stored in the start address register 14 and the end address register 15. Here, in the second example, the start address register 14 and the end address register 15 store the Tags and the Indexes among the Tags, the Indexes, and the Offsets being the address information in the storage area 2a held by the L1 cache system 2 shown in FIG. 1. Please note that the start address register 14 may be caused to store the Indexes alone as in the preceding description and a new additional register may be set to store the Tags. This is the same to the end address register 15. With reference to FIG. 1 to 4, and 11, specific description will hereinafter be given of the operations of an L1 cache system 2 and the L2 cache system 10 in the second example.

The CPU 1 firstly sets a specified command showing the write-back mode for the command register 16 as in the first example and in the embodiment. This is assumed to be a third write-back mode. The CPU 1 sets the values of the Tag and the Index in the address information in the storage area 2a held by the L1 cache system 2 for the start address register 14. For example, it is assumed here that the CPU 1 sets a Tag value 4 and an Index value 3 for the start address register 14. Similarly, the CPU 1 sets the Tag value and the Index value in the address information in the storage area 2a for the end address register 15, too. For example, it is assumed here that the CPU 1 sets a Tag value 7 and an Index value 1 for the end address register 15. The start address register 14 outputs the Index value 0 to the address count register 17, and the address count register 17 stores the received Index value 0. The end address register 15 then transmits the Index value 3 to the comparator 20.

Next, the command register 16 for which the CPU 1 has set the command showing the third write-backmode similarly transmits the mode signal showing the third mode to the write-back control circuit 22. The write-back control circuit 22 which has received the mode signal showing the third mode transmits the mode signal showing the third mode to the controller 124. The controller 124 which has received the third mode recognizes that the write-back mode performed by the L1 cache system 2 is the third mode, and reads the Tag value stored in each of the start address register 14 and the end address register 15. Here, the controller 124 reads the Tag value 4 from the start address register 14, and reads the Tag value 7 from the end address register 15. The controller 124 then recognizes the range of an address held by dirty data to be written back by the L1 cache system 2, based on these Tag values read from the start address register 14 and the end address register 15. For example, since the controller 124 obtains the Tag values 4 and 7 from the start address register 14 and the end address register 15, the controller 124 recognizes that the controller of the L1 cache system 2 writes back to the L2 cache system 10 only dirty data in the range of the address from the Tag values 4 to 7 among data stored in the storage area 2a.

Here, the controller 124 recognizes in what kind of processing method the controller of the L1 cache system 2 writes back the data to be written back to the external memory 3. The processingmethodmay be the one described in the first example, or may be the one described in the embodiment. It is assumed here that the controller 124 writes back the dirty data to the external memory 3 in accordance with the method described in the first example. For example, it is possible to add information, to the mode signal showing the third mode received by the controller 124 via the command register 16 and the write-back control circuit 22, showing in which method of the first example and of the embodiment the write-back to the external memory 3 is executed.

The controller of the L1 cache system 2 outputs the dirty data stored in the storage area 2a to the L2 cache system 10 in the order of ascending Index values. In other words, with reference to FIGS. 2 and 3, the controller of the L1 cache system 2 sequentially outputs to the L2 cache system 10 starting from the dirty data having the Index value 0 to the dirty data having the Index value 3. However, in the second example, data outputted by the controller of the L1 cache system 2 varies depending on the Tag value. The start address register 14 and the end address register 15 included in the L2 cache system 10 store the Tag values 4 and 7, but the controller of the L1 cache system 2, too, recognizes the Tag values 4 and 7 from the CPU 1 beforehand. In accordance with the Tag values 4 and 7, the controller of the L1 cache system 2 firstly outputs to the L2 cache system 10 dirty data having the Index value 0 in a range of the Tag values 4 to 7. Next, the controller of the L1 cache system 2 writes back dirty data having the Index value 1 in the range of the Tag values 4 to 7. From this forward, the controller of the L1 cache system 2 similarly outputs to the L2 cache system 10 dirty data having the Index value 2 in the range of the Tag values 4 to 7, and then dirty data having the Index value 3 in the range of the Tag values 4 to 7. For example, with reference to FIG. 2, the controller of the L1 cache system 2 writes back (Tag, Index) = (70), (51) and (53) alone. (Tag, Index) = (80) and (32) are dirty data, but their Tag values are not in the range of the Tag values 4 to 7. Therefore, the controller of the L1 cache system 2 does not write back each of the data of (Tag, Index) = (80) and (32).

As described above, the controller of the L1 cache system 2 outputs these pieces of data to the buffer 122 included in the L2 cache system 10 in the order of (Tag, Index) = (70), (51) and (53). At this point, the address register 19 stores the Indexes of the data that the L1 cache system 2 outputted to the buffer 122 as in the first example.

The controller of the L1 cache system 2 firstly outputs the dirtydatumof (Tag, Index) = (70). Accordingly, the address register 19 stores the Index value 0 as in the first example. The address register 19 outputs the stored Index value 0 to the comparator 21. On the other hand, the start address register 14 stores (Tag, Index) = (43), but the start address register 14 outputs the Index value 0 to the address count register 17 regardless of the stored (Tag, Index) = (43). Hence, the address count register 17 outputs the Index value 0 to the comparators 21 and 20. Accordingly, the comparator 21 compares the Index value 0 received from the address register 19 with the Index value 0 received from the address count register 17. Since the Index value 0 received from the address register 19 is equal to the Index value 0 received from the address count register 17, the comparator 21 does not transmit the write-back request signal to the write-back control circuit 22. Please note that the end address register 15 stores (Tag, Index) = (71), but the end address register 15 outputs the Index value 3 to the comparator 20 regardless of the stored (Tag, Index) = (71). Accordingly, the comparator 20 receives the Index value 3 from the end address register 15, and receives the Index value 0 from the address count register 17. Since the two Index values received by the comparator 20 do not agree with each other at this point, the comparator 20 does not transmit the L1 cache system write back completion signal. In addition, the datum of (Tag, Index) = (70) is written into the storage area 121 of the L2 cache system 10 as in the first example.

Next, the controller of the L1 cache system 2 writes back the dirty datum of (Tag, Index) = (51). Accordingly, the address register 19 stores the Index value 1 as in the first example. The address register 19 outputs the stored Index value 1 to the comparator 21. On the other hand, the comparator 21 receives the Index value 0 from the address count register 17. Hence, the comparator 21 compares the Index value 1 received from the address register 19 with the Index value 0 received from the address count register 17. Since the Index value 1 received from the address register 19 is greater than the Index value 0 received from the address count register 17, the comparator 21 transmits the write-back request signal to the write-back control circuit 22. At this point, the comparator 20 does not output the L1 cache system write back completion signal.

The write-back control circuit 22 which has received the write-back request signal from the comparator 21 transmits the write-back execution signal to the controller 124. The controller 124 which has received the write-back execution signal from the write-back control circuit 22 reads out the Index value 0 stored in the address count register 17. The controller 124 then judges that the L1 cache system 2 does not write back the dirty data having the Index value 0. This is because, as in the first example, the L1 cache system 2 writes back the dirty data in the order of ascending Indexes. The controller 124 then transmits the read signal to the storage area 121. Here, after previously receiving the mode signal showing the third write-back mode from the write-back control circuit 22, the controller 124 reads the Tag values 4 and 7 from the start address register 14 and the end address register 15. Therefore, the controller 124 recognizes that Tag values held by the data that the controller of the L1 cache system 2 outputs to the buffer 122 are limited to 4 to 7. Hence, the controller 124 transmits the read signal to instruct the storage area 121 to read out the dirty data having the Index value 0 in a range of the Tag values 4 to 7. The storage area 121 outputs the dirty data in response to the read signal from the controller 124. In this second example, with reference to FIG. 3, the data of (Tag, Index) = (40) and (70) are outputted to the buffer 123.

Please note that it is assumed in the second example that the controller 124 processes dirty data that the buffer 122 has received from the L1 cache system 2 by the method shown in the first example. Therefore, at this point, the controller 124 also writes the datum of (Tag, Index) = (51) into the storage area 121. However, at this point, the controller 124 instructs the storage area 121 to output the dirty data having the Index value 0 in the range of the Tag values 4 to 7. Accordingly, the storage area 121 outputs to the buffer 123 the data of (Tag, Index) = (40) and (70), and the buffer 123 writes back to the external memory 3 the data of (Tag, Index) = (40) and (70) in response to the read signal received from the controller 124. Moreover, it is also possible that the controller 124 processes the dirty data that the buffer 122 has received from the L1 cache system 2 by the method shown in the embodiment. In this case, the controller 124 and the buffer 123 write back (Tag, Index) = (41) and (70) based on the method shown in the embodiment.

Next, given that the controller of the L1 cache system 2 outputs the datum of (Tag, Index) = (53) to the buffer 122. As a result, as described above, the Index value stored in the address register 19 becomes 3 and the address register 19 transmits the Index value 3 to the comparator 21. Here, as shown in the first example, the Index value stored in the address count register 17 has changed from 0 to 1 due to the operations of the count-up circuit 18 and the like. Hence, the comparator 21 receives the Index value 1 from the address count register 17, and then compares the Index value 3 received from the address register 19 with the Index value 1 received by the address count register 17 to transmit the write-back request signal to the write-back control circuit 22.

Afterwards, similarly, the controller 124 receives the write-back execution signal from the write-back control circuit 22 to read the Index value 1 from the address count register 17, and judges that the L1 cache system 2 does not write back the dirty data having the Index value 1. The controller 124 then instructs the storage area 121 to output to the buffer 123 the dirty data having the Index value 1 in the range of the Tag values 4 to 7. With reference to FIG. 3, the storage area 121 is caused to output (Tag, Index) = (51) to the buffer 123. The buffer 123 outputs the datumof (Tag, Index) = (51) to the external memory 3 by the method shown in the first example. In addition, the datum of (Tag, Index) = (53) is written into the storage area 121 of the L2 cache system 10 as in the first example.

When the controller of the L1 cache system 2 outputs (Tag, Index) = (53) to the buffer 122, the Index stored in the address register 19 becomes 3. Since the Index value stored in the address count register 17 is 2 due to the operations of the count-up circuit 18 and the like, the controller 124 instructs the storage area 121 to read the dirty data having the Index value 2 in the range of the Tag values 4 to 7 in accordance with the same process. The storage area 121 outputs the matching data to the buffer 123, and the buffer 123 outputs and writes back the received data to the external memory 3. Here, with reference to FIG. 3, since the storage area 121 does not store the data having the Index value 2 in the range of the Tag values 4 to 7, the buffer 123 does not perform the write-back.

Afterwards, the Index value stored in the address count register 17 changes from 2 to 3 due to the operation of the count-up circuit 18, and the comparators 20 and 21 receive the Index value 3 from the address count register 17. As shown in the first example, since both of the Index values stored in the address register 19 and the address count register 17 are 3 and the same, the comparator 21 does not transmit the write-back request signal to the write-back control circuit 22 in this case. On the other hand, since the Index value that the end address register 15 outputs to the comparator 20 is 3, the comparator 20 transmits the L1 cache systemwrite back completion signal to the write-back control circuit 22 as in the first example. Accordingly, the write-back control circuit 22 transmits the L1 cache system write back completion signal to the controller 124. The controller 124 which has received the L1 cache system write back completion signal from the write-back control circuit 22 judges that the L1 cache system 2 does not write back to the L2 cache system 10 the dirty data having an Index value greater than the Index value 3. The controller 124 then instructs the storage area 121 to output to the buffer 123 the dirty data having the Index 3 or greater, that is, the dirty data having the Index value 3 in the range of the Tag values 4 to 7 in this second example. It can be seen from FIG. 3 that the storage area 121 outputs the datum of (Tag, Index) = (53). The buffer 123 which has received the datum of (Tag, Index) = (53) from the storage area 121 writes back the datum of (Tag, Index) = (53) to the external memory 3.

As described above, in the write-back process in the second example, it is made possible to write back only a part of data to the external memory 3 among data stored in the storage area 2a in the L1 cache system 2 by use of the Tag value stored in the start address register 14 and the end address register 15.

## Claims

1. A hierarchical cache memory system comprising:
a first cache system (2) having a first cache memory (2a) storing first data, said first cache system (2) further having a first cache controller; and
a second cache system (10) coupled to said first cache system (2) and having a second cache controller, said first cache system (2) transferring said first data toward an external memory (3) through said second cache system,
wherein said first cache controller controls said first cache system (2) to perform a first transfer operation in which said first cache controller obtains said first data from said first cache memory (2a) and transfers said first data to said second cache system (10),
wherein said second cache controller controls said second cache system (10) to perform a second transfer operation in which said second cache controller receives said first data from said first cache system (2) and transfers said first data toward said external memory (3),
wherein said first and second transfer operations are performed at least partially in parallel,
**characterized in that** said second cache system (10) further includes a second cache memory (121) storing second data, said second cache system transferring said second data toward said external memory (3),
said second cache controller during said second transfer operation further obtains said second data from said second cache memory (121) and further transfers said second data toward said external memory (3), and
said second cache controller during said second transfer operation transfers said first data received from said first cache system (2) toward said external memory (3) without writing said first data into said second cache memory (121).

2. The hierarchical cache memory system according to claim 1, wherein
said first data obtained from said first cache system (2) includes third data and fourth data,
said first cache controller transferring said third data and said fourth data during said first transfer operation, and
wherein said second cache controller transfers one of said second data toward said external memory (3) in said second transfer operation after said second cache controller transfers said third data to said external memory (3) and before said first cache controller transfers said fourth data to said second cache system (10).

## Patentansprüche

1. Hierarchisches Cache-Speichersystem, das Folgendes umfasst:
ein erstes Cache-System (2), das einen ersten Cache-Speicher (2a) aufweist, der erste Daten speichert, wobei das erste Cache-System (2) weiter eine erste Cache-Steuerung aufweist; und
ein zweites Cache-System (10), das an das erste Cache-System (2) gekoppelt ist und eine zweite Cache-Steuerung aufweist, wobei das erste Cache-System (2) die ersten Daten durch das zweite Cache-System zu einem externen Speicher (3) überträgt,
wobei die erste Cache-Steuerung das erste Cache-System (2) zum Durchführen eines ersten Übertragungsvorganges steuert, bei welchem die erste Cache-Steuerung die ersten Daten aus dem ersten Cache-Speicher (2a) erhält und die ersten Daten zu dem zweiten Cache-System (10) überträgt,
wobei die zweite Cache-Steuerung das zweite Cache-System (10) zum Durchführen eines zweiten Übertragungsvorganges steuert, bei welchem die zweite Cache-Steuerung die ersten Daten von dem ersten Cache-System (2) empfängt und die ersten Daten zu dem externen Speicher (3) überträgt,
wobei die ersten und zweiten Übertragungsvorgänge mindestens teilweise parallel durchgeführt werden,
**dadurch gekennzeichnet, dass** das zweite Cache-System (10) weiter einen zweiten Cache-Speicher (121) einschließt, der zweite Daten speichert, das zweite Cache-System die zweiten Daten zu dem externen Speicher (3) überträgt,
die zweite Cache-Steuerung während des zweiten Übertragungsvorganges weiter die zweiten Daten von dem zweiten Cache-Speicher (121) erhält und weiter die zweiten Daten zu dem externen Speicher (3) überträgt und
die zweite Cache-Steuerung während des zweiter Übertragungsvorganges die ersten Daten, die von dem ersten Cache-System (2) erhalten wurden, zu dem externen Speicher (3) überträgt, ohne die ersten Daten in den zweiten Cache-Speicher (121) zu schreiben.

2. Hierarchisches Cache-Speichersystem gemäß Anspruch 1, wobei
die ersten Daten, die von dem ersten Cache-System (2) erhalten wurden, dritte Daten und vierte Daten einschließen,
die erste Cache-Steuerung die dritten Daten und die vierten Daten während des ersten Übertragungsvorganges überträgt und
wobei die zweite Cache-Steuerung eines der zweiten Daten zu dem externen Speicher (3) in dem zweiten Übertragungsvorgang überträgt, nachdem die zweite Cache-Steuerung die dritten Daten zu dem externen Speicher (3) überträgt und bevor die erste Cache-Steuerung die vierten Daten zu dem zweiten Cache-System (10) überträgt.

## Revendications

1. Système de mémoire cache hiérarchique comprenant:
un premier système cache (2) ayant une première mémoire cache (2a) stockant des premières données, ledit premier système cache (2) ayant en outre un premier contrôleur cache ; et
un deuxième système cache (10) couplé au dit premier système cache (2) et ayant un deuxième contrôleur cache, ledit premier système cache (2) transférant lesdites premières données vers une mémoire externe (3) par le biais dudit deuxième système cache,
dans lequel ledit premier contrôleur cache commande au dit premier système cache (2) d'effectuer une première opération de transfert dans laquelle ledit premier contrôleur cache obtient lesdites premières données de ladite première mémoire cache (2a) et transfère lesdites premières données au dit deuxième système cache (10),
dans lequel ledit deuxième contrôleur cache commande au dit deuxième système cache (10) d'effectuer une deuxième opération de transfert dans laquelle ledit deuxième contrôleur cache reçoit lesdites premières données dudit premier système cache (2) et transfère lesdites premières données vers ladite mémoire externe (3),
dans lequel lesdites première et deuxième opérations de transfert sont effectuées au moins partiellement en parallèle,
**caractérise en ce que** ledit deuxième système cache (10) comprend en outre une deuxième mémoire cache (121) stockant des deuxièmes données, ledit deuxième système cache transférant lesdites deuxièmes données vers ladite mémoire externe (3),
ledit deuxième contrôleur cache au cours de ladite deuxième opération de transfert obtient en outre lesdites deuxièmes données de ladite deuxième mémoire cache (121) et transfère en outre lesdites deuxièmes données vers ladite mémoire externe (3), et
ledit deuxième contrôleur cache au cours de ladite deuxième opération de transfert transfère lesdites premières données reçues dudit premier système cache (2) vers ladite mémoire externe (3) sans écrire lesdites premières données dans ladite deuxième mémoire cache (121).

2. Système de mémoire cache hiérarchique selon la revendication 1, dans lequel
lesdites premières données obtenues dudit premier système cache (2) comprennent des troisièmes données et des quatrièmes données,
ledit premier contrôleur cache transférant lesdites troisièmes données et lesdites quatrièmes données au cours de ladite première opération de transfert, et
dans lequel ledit deuxième contrôleur cache transfère l'une desdites deuxièmes données vers ladite mémoire externe (3) dans ladite deuxième opération de transfert après que ledit deuxième contrôleur cache transfère lesdites troisièmes données à ladite mémoire externe (3) et avant que ledit premier contrôleur cache transfère lesdites quatrièmes données au dit deuxième système cache (10).
